Europäisches Patentamt

European Patent Office

Office européen des brevets

(19)

(11) EP 0 492 279 B1

(12) **EUROPÄISCHE PATENTSCHRIFT**

(45) Veröffentlichungstag und Bekanntmachung des Hinweises auf die Patenterteilung:
**21.02.1996 Patentblatt 1996/08**

(51) Int Cl.6: **G01F 1/72**, G01F 1/36, F15B 19/00

(21) Anmeldenummer: **91121231.4**

(22) Anmeldetag: **11.12.1991**

(54) **Messeinrichtung zur Erfassung charakteristischer Kenngrössen, welche die Arbeitsweise hydraulischer Aggregate anzeigen**

Measuring device for establishing characteristic magnitudes which display the working of hydraulic systems

Dispositif de mesure pour la saisie de grandeurs charactéristiques montrant la manière de travailler des systèmes hydrauliques

(84) Benannte Vertragsstaaten:
**AT CH DE FR GB IT LI**

(30) Priorität: **20.12.1990 DE 4040919**

(43) Veröffentlichungstag der Anmeldung:
**01.07.1992 Patentblatt 1992/27**

(73) Patentinhaber:
**KRUPP MASCHINENTECHNIK GESELLSCHAFT MIT BESCHRÄNKTER HAFTUNG
D-45143 Essen (DE)**

(72) Erfinder:
- **Arndt, Friedrich Karl, Dr.-Ing.
  W-4300 Essen 1 (DE)**
- **Bartels, Robert-Jan, Dr.-Ing.
  W-4300 Essen 17 (DE)**
- **Vielhaber, Heribert
  W-4300 Essen 1 (DE)**

(56) Entgegenhaltungen:
EP-A- 0 086 259      EP-A- 0 166 502
DE-A- 2 152 699      US-A- 2 924 971

- **PATENT ABSTRACTS OF JAPAN vol. 9, no. 77 (M-369)(1800) 6. April 1985 ; & JP-A-59 206 632**
- **ENGINEER, Bd. 224, Nr. 5839, 22. Dezember 1967, London, GB, Seiten 821-825 ; S.W.E. Earles et al.: "Pulsating Flow Measurement Using an Orifice-Manometer System"**

EP 0 492 279 B1

**Beschreibung**

Die Erfindung betrifft eine Meßeinrichtung für charakteristische Kenngrößen, welche die Arbeitsweise hydraulischer Aggregate - insbesondere Energieerzeuger wie Pumpen und Energieverbraucher wie Motoren, Schlagwerke, Zylinder - anzeigen.

Der optimale Einsatz hydraulischer Aggregate wie Pumpen, Motoren, Schlagwerke und Zylinder setzt die Beobachtung bestimmter charakteristischer Kenngrößen - insbesondere des Arbeitsdrucks und des Zuführmengenstroms bzw. Eingangsmengenstroms der Hydraulikflüssigkeit - voraus. Da beispielsweise durch äußere Einflüsse und/oder Verschleiß hervorgerufene Veränderungen der Arbeitsweise des Energieerzeugers oder Energieverbrauchers in der Regel nur allmählich eintreten und somit für das Bedienungspersonal nicht ohne weiteres ersichtlich sind, ist eine fortlaufende oder zumindest in Zeitabständen wiederholbare Überprüfungsmöglichkeit der genannten charakteristischen Kenngrößen von Vorteil; die dabei gewonnenen Informationen können ggf. dazu benutzt werden, die Arbeitsweise der betreffenden hydraulischen Aggregate - auch über eine Regelung - zu beeinflussen.

Aus der Größe des Arbeitsdrucks und beispielsweise des Eingangsmengenstroms läßt sich bei Motoren das Drehmoment bzw. die Drehzahl, bei Schlagwerken die Einzelschlagenergie bzw. die Schlagkolben-Schlagzahl und bei Zylindern die Verstellkraft bzw. Verstellgeschwindigkeit bestimmen.

Zur Ermittlung der Größe des Arbeitsdrucks und des Zuführmengenstroms des Energieerzeugers bzw. Eingangsmengenstroms in einen Energieverbraucher wird üblicherweise eine Druckmeßeinheit bzw. eine Durchflußmengenmeßeinheit eingesetzt.

Aus der Druckschrift US-A-2 924 971 ist bereits eine Prüfeinheit für hydraulische Kreisläufe mit einer Meßstrecke bekannt, welche in die Druckleitung des zu prüfenden Aggregats eingebaut ist und eine Drosselstelle aufweist. Der an dieser anliegende Differenzdruck wird mittels eines Differenzdruckwandlers umgewandelt und über eine Anzeigeeinheit als augenblickliche Größe des Durchflußmengenstroms erkennbar gemacht.

Aus der DE-A-21 52 699 ist eine Prüfeinrichtung für hydraulische Kreisläufe bekannt, die ebenfalls eine mit einer Drosselstelle ausgestattete Meßstrecke aufweist. Der an dieser anliegende Differenzdruck wird mittels eines Differenzdruckmessers erfaßt und im Rahmen des bekannten Prüfverfahrens dazu benutzt, den Regulierungspunkt eines in die Rücklaufleitung eingebauten Rücklaufventils festzulegen.

Mit der Druckschrift EP-A-0 166 502 ist bereits der Vorschlag unterbreitet worden, den an einer Drosselstelle anliegenden, durch zwei Druckwandler erfaßten Differenzdruck mittels eines Mikrocomputers auszuwerten und über eine Anzeigeeinheit, beispielsweise in Form eines Meßwerts für den augenblicklichen Durchflußmengenstrom, erkennbar zu machen.

Die Zeitschrift "THE ENGINEER" (Band 224, Nr. 5839, 22. Dezember 1967, Seiten 821 bis 825) befaßt sich mit der Durchflußmengenmessung pulsierender Strömungen unter Verwendung eines mit einer Drosselstelle zusammenwirkenden Differenzdruckwandlers. Zur Vermeidung von Fehlmessungen wird in diesem Zusammenhang der Vorschlag unterbreitet, etwa vorhandene Pulsationen hinsichtlich ihrer Stärke sowie Frequenz zu ermitteln und zur Korrektur des Durchflußmengenmeßwerts heranzuziehen.

Ein ähnlicher Gedanke liegt der Veröffentlichung Patent Abstracts of Japan, Vol. 9, No. 77 (M-369) (1800), 6. April 1985 (betreffend JP-A-59 206 632) zugrunde. Hier wird zur Vergleichmäßigung der Luftzufuhr in Verbrennungsmotoren der Vorschlag unterbreitet, den an einer Drosselstelle anliegenden Differenzdruck über einen Differenzdruckwandler mittels eines Computers in ein Stellsignal umzuwandeln. Der Computer dient dabei auch dazu, im Ausgangssignal des Differenzdruckwandlers enthaltene periodische Schwankungen zu beseitigen, so daß am Computerausgang ein gleichförmiges Stellsignal anliegt.

Der Erfindung liegt die Aufgabe zugrunde, eine einfach aufgebaute, betriebssichere Meßeinrichtung zu entwickeln, die verlustarm arbeitet und vielfältige Einsatzmöglichkeiten bietet, beispielsweise als Überwachungsgerät, als Prüfgerät bei Servicearbeiten und als Meßglied für die automatische Regelung des Energieerzeugers bzw. Energieverbrauchers.

Die Erfindung baut dabei auf der Erkenntnis auf, daß dem statisch zur Anzeige gebrachten Arbeitsdruck ein dynamischer Druckanteil überlagert ist, welcher durch die Arbeitsweise des Energieerzeugers oder des Energieverbrauchers hervorgerufen ist. Dieser Wechseldruckanteil beinhaltet Informationen, die zusätzlich wertvolle Aufschlüsse über die Arbeitsweise des Energieerzeugers und/oder Energieverbrauchers vermitteln können.

Die Aufgabe wird durch eine Meßeinrichtung gelöst, welche die Merkmale des Anspruchs 1 aufweist. Der Grundgedanke der Erfindung besteht dabei in der Verwendung einer mit zumindest einer Drosselstelle ausgestatteten Meßstrecke, welche in die Druckleitung des Aggregats eingebaut ist, und eines jeweils einer Drosselstelle zugehörigen Differenzdruckwandlers, mit dem sich der an der Drosselstelle anliegende Differenzdruck erfassen läßt. Das vom Differenzdruckwandler erzeugte Ausgangssignal, welches mittels einer Elektroumformeinheit jeweils in einen Gleich- und einen Wechselspannungsanteil zerlegt wird, wird über die Ausgangsklemmen der Elektroumformeinheit einer Auswertung zugeführt. Diese kann insbesondere aus einer Anzeigeeinheit und/oder einer Regeleinheit zur Beeinflussung des Arbeitsverhaltens bestehen.

Da die Meßeinrichtung lediglich einen geeigneten Anschluß an die Druckleitung des Energieerzeugers und/oder des Energieverbrauchers benötigt, ist sie unabhängig von dessen Bauweise einsetzbar.

Im einfachsten Fall weist die Meßeinrichtung eine mit einer Drosselstelle ausgestattete Meßstrecke, einen zugehörigen Differenzdruckwandler und eine diesem nachgeschaltete Elektroumformeinheit auf. Diese Ausführungsform gestattet es dementsprechend, die Arbeitsweise eines einzelnen hydraulischen Aggregats unter Berücksichtigung des dynamischen Druckanteils zu beobachten, zu überprüfen und ggf. auch zu beeinflussen. Beispielsweise stellt die Frequenz des dynamischen Druckanteils ein Maß für die Drehzahl einer Pumpe - und damit ein Maß für deren Fördermengenstrom - dar, welcher ein Zylinder als Energieverbraucher nachgeschaltet ist. Aufgrund der Frequenz des dynamischen Druckanteils kann jedoch auch die Drehzahl eines Motors bzw. die Schlagkolben-Schlagzahl eines Schlagwerkes ermittelt werden, woraus sich weiterhin Aussagen beispielsweise über den Verschleißzustand des betreffenden Energieverbrauchers ableiten lassen. Die Meßeinrichtung kann jedoch auch in der Weise ausgestaltet sein, daß gleichzeitig der dynamische Druckanteil zweier hydraulischer Aggregate - beispielsweise einer Pumpe und eines nachgeschalteten Energieverbrauchers - ermittelt werden kann. In diesem Falle umfaßt die Meßstrecke eine Meßdrosselstelle und parallel dazu liegend zwei hintereinander geschaltete Drosselstellen, wobei letztere durch ein Dämpfungselement gegeneinander abgeschirmt sind und jeweils einen Differenzdruckwandler mit nachgeschalteter Elektroumformeinheit aufweisen (Anspruch 2).

Vorzugsweise ist das Dämpfungselement, welches die hintereinander geschalteten Drosselstellen der Meßstrecke im Hinblick auf Schwingungsvorgänge voneinander trennt, als zwischen den Drosselstellen angeordneter Druckspeicher (beispielsweise Membranspreicher) ausgebildet (Anspruch 3).

Der Erfindungsgegenstand läßt sich dadurch vorteilhaft ausgestalten, daß jede Drosselstelle-und bei der Ausführungsform gemäß Anspruch 2 auch die Meßdrosselstelle - als Blende ausgebildet ist (Anspruch 4). Auf diese Weise ist sichergestellt, daß die Meßeinrichtung zumindest weitgehend viskositäts- und temperaturunabhängig arbeitet, d. h. insoweit unabhängig ist von den Eigenschaften der eingesetzten Hydraulikflüssigkeit.

Der Einsatzbereich und die Arbeitsweise des Erfindungsgegenstands lassen sich dadurch ggf. positiv beeinflussen, daß zumindest eine der Blenden einen Blendenquerschnitt mit verstellbarer Größe aufweist (Anspruch 5).

Jede Elektroumformeinheit kann insbesondere als (an sich bekannte) elektrische Weiche ausgebildet sein, die über einen Hochpaß (im einfachsten Fall als Kondensator ausgebildet) und über eine (als Drossel wirksame) Induktivität den Wechselspannungsanteil des Ausgangssignals von dessen Gleichspannungsanteil trennt (Anspruch 6).

Die Frequenz des Wechselspannungsanteils entspricht der Frequenz des dynamischen Druckanteils und ist damit direkt proportional beispielsweise der Drehzahl einer vorgeschalteten Pumpe bzw. eines nachgeschalteten Motors oder entspricht der Schlagkolben-Schlagzahl eines Schlagwerks. Der Gleichspannungsanteil ist proportional dem statischen Druckanteil und stellt damit ein Maß für den Zuführmengenstrom einer Pumpe oder den tatsächlichen Eingangsmengenstrom in einen Motor oder ein Schlagwerk dar.

Die an den Ausgangsklemmen der Elektroumformeinheit abgreifbaren Teilsignale können zur Anzeige, zur Registrierung oder als Eingangsgrößen für einen Regelkreis verwendet werden.

Die Erfindung wird nachfolgend anhand in der Zeichnung dargestellter Ausführungsbeispiele im einzelnen erläutert.

Es zeigen:

Fig. 1a bis c ein stark vereinfachtes Hydraulikschaltschema mit einem Energieerzeuger in Form einer Pumpe, einer Meßeinrichtung für charakteristische Kenngrößen und unterschiedlich ausgebildeten Energieverbrauchern, nämlich einem Motor (Fig. 1a) bzw. einem Zylinder (Fig. 1 b) bzw. einem Schlagwerk (Fig. 1 c),

Fig. 2a stark schematisiert ein Hydraulikschaltschema mit einem Energieerzeuger in Form einer Pumpe, einer mit einer Blende ausgestatteten Meßstrecke als Bestandteil der in Fig. 1a angedeuteten Meßeinrichtung und einem als Schlagwerk ausgebildeten Energieverbraucher,

Fig. 2b stark schematisiert die weiteren wesentlichen Bestandteile der in Fig. 1a dargestellten Meßeinrichtung, nämlich einen der Meßstrecke nachgeschalteten Differenzdruckwandler mit zugehöriger Elektroumformeinheit und

Fig. 3 stark vereinfacht ein Hydraulikschaltschema mit einer Meßeinrichtung, welche zwei Differenzdruckwandler mit zugehöriger Elektroumformeinheit aufweist.

Bei der Anordnung gemäß Fig. 1a treibt eine Pumpe 1 über eine Druckleitung 2 einen als Motor 3 ausgebildeten Energieverbraucher an. Die Rücklaufleitung zwischen den hydraulischen Aggregaten 3 und 1 ist mit 4 bezeichnet. Der den Motor antreibende Arbeitsdruck ist durch einen Doppelpfeil mit der Bezeichnung "p" angedeutet.

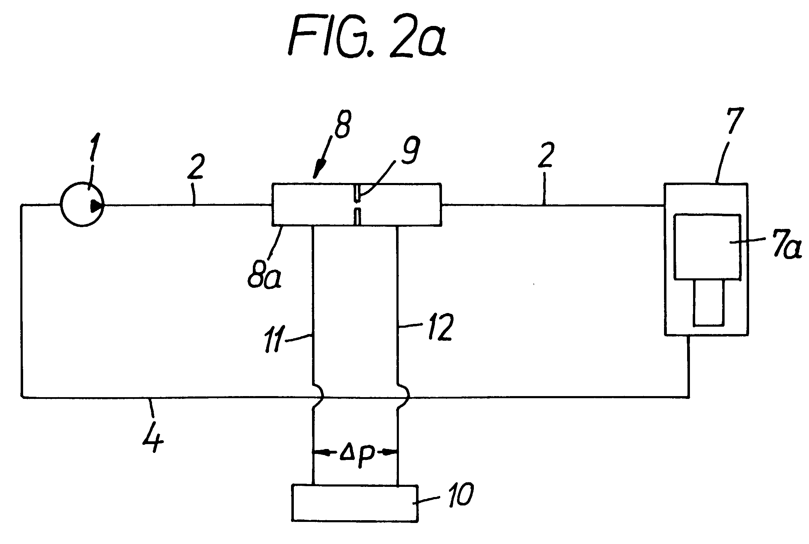

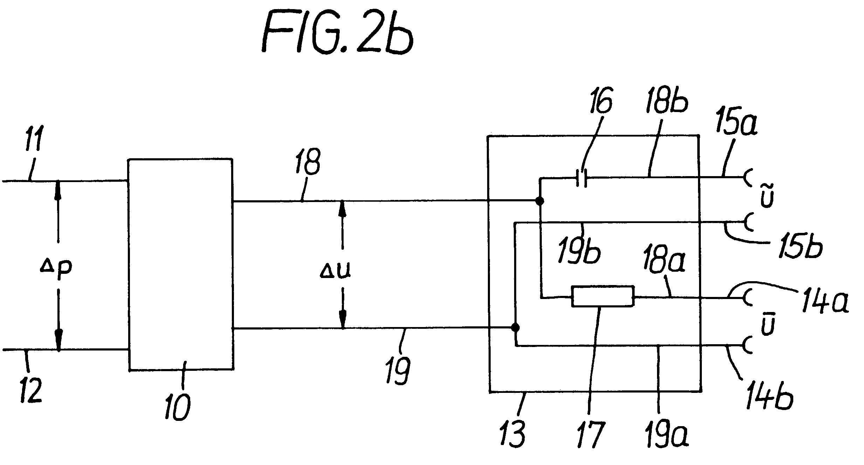

In die Druckleitung 2 ist eine Meßeinrichtung 5 (vgl. dazu Fig. 2a, b) eingebaut, mit der sich unter anderem der durch den Betrieb der Pumpe 1 hervorgerufene dynamische Druckanteil $\tilde{p}_1$ und oder der vom Motor 3 verursachte dynamische Druckanteil $\hat{p}_2$ ermitteln läßt. Die Frequenz des dynamischen Druckanteils $\tilde{p}_2$ ist ein Maß für die tatsächliche Drehzahl des Motors. Aus Abweichungen zwischen der auf diese Weise bestimmten Ist-Drehzahl und der aufgrund des Eingangsmengenstroms in den Motor zu erwartenden Soll-Drehzahl können Rückschlüsse über Fertigungstoleranzen bzw. den Verschleißzustand des Motors und/oder über den Zustand der Hydraulikflüssigkeit gezogen werden.

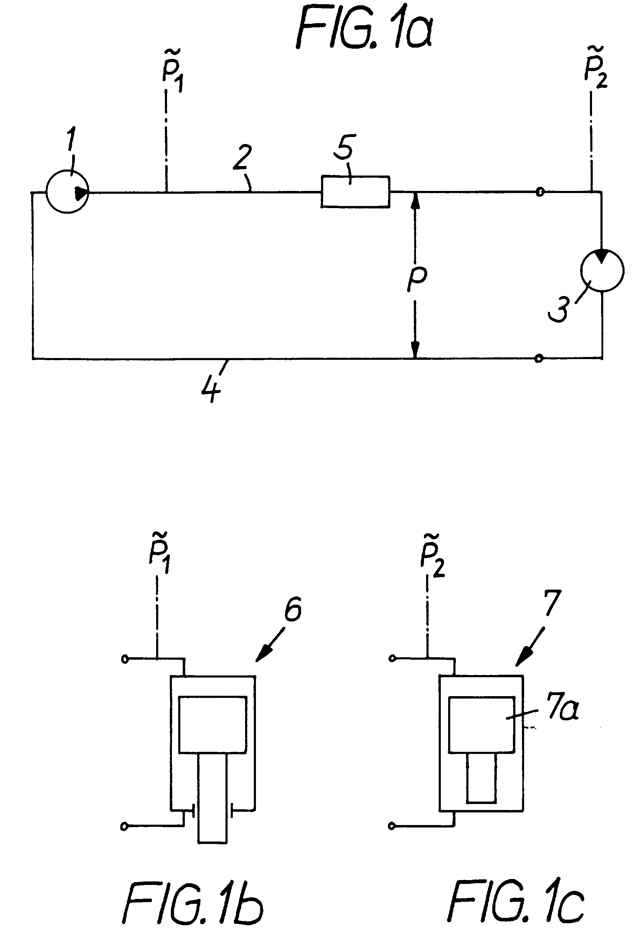

Falls über die Pumpe 1 (gemäß Fig. 1b) ein Zylinder 6 angetrieben wird, stellt die Frequenz des dynamischen Druckanteils $\tilde{p}_1$ ein Maß für die Ist-Drehzahl der Pumpe 1 und damit ein Maß für den Zuführmengenstrom einer neuwertigen Pumpe bei Einsatz einer Hydraulikflüssigkeit mit vorgeschriebener Viskosität dar.

Abweichungen vom Soll-Zuführmengenstrom - ermittelt aufgrund einer unmittelbaren Messung des Fördermengenstroms - geben Hinweise auf Fertigungstoleranzen bzw. den Verschleißzustand der Pumpe 1 und/oder den Zustand der Hydraulikflüssigkeit (d. h. beispielsweise darüber, ob eventuell eine Hydraulikflüssigkeit mit einer ungeeigneten Viskosität zu einer erhöhten Leckage führt).

Falls über die Pumpe 1 (gemäß Fig. 1c) ein Schlagwerk 7 (mit einem in Längsrichtung hin- und herbewegten Schlagkolben 7a) mit Antriebsenergie versorgt wird, gibt die Frequenz des dynamischen Druckanteils $\tilde{p}_2$ unmittelbar die Schlagzahl des Schlagkolbens 7a wieder. Diese verändert sich bei konstant gehaltenem Zuführmengenstrom in Abhängigkeit vom Widerstand des Materials, welches mittels eines vom Schlagwerk 7 angetriebenen Meißels (nicht dargestellt) bearbeitet wird.

Die aus dem dynamischen Druckanteil $\tilde{p}_2$ abgeleitete Schlagkolben-Schlagzahl und/oder der aus $\tilde{p}_1$ ermittelte Zuführmengenstrom (vgl. Fig. 1a) können einzeln oder als Verhältnis zwischen Schlagkolben-Schlagzahl und Zuführmengenstrom als Eingangsgrößen für eine Schlagzahlregelung Verwendung finden.

Das zuletzt erwähnte Größenverhältnis und die zuvor angesprochenen dynamischen Druckanteile können auch zur Feststellung des Verschleißzustandes bzw. des Laufverhaltens des Schlagwerks herangezogen werden.

Aus Fig. 2a, b ist der grundsätzliche Aufbau der Meßeinrichtung 5 ersichtlich, dargestellt für den Anwendungsfall gemäß Fig. 1c.

In die Druckleitung 2 zwischen der Pumpe 1 und dem Schlagwerk 7 ist dabei als einer der wesentlichen Bestandteile der Meßeinrichtung eine Meßstrecke 8 eingebaut, deren Abmessung durch ein Gehäuse 8a festgelegt und welche durch eine Drosselstelle in Gestalt einer viskositätsunabhängigen Blende 9 unterteilt ist. Der an dieser auftretende Druckabfall $\Delta p$ wird mittels eines Differenzdruckwandlers 10 - der eingangsseitig über Verbindungsleitungen 11 und 12 mit der Meßstrecke 8 in Verbindung steht - in eine elektrische Spannung $\Delta u$ umgewandelt (Fig. 2b). Diese wird ihrerseits mittels einer nachgeschalteten Elektroumformeinheit 13 in einen Gleich- und einen Wechselspannungsanteil $\bar{u}$ bzw. $\tilde{u}$ zerlegt, die an Ausgangsklemmen 14a, b bzw. 15a, b einer Auswertung zuführbar sind.

Die Elektroumformeinheit ist in dem dargestellten Ausführungsbeispiel als elektrische Weiche ausgebildet. Diese weist in die Anschlußklemmen 14a und 15a übergehende Parallelleitungen 18a, 18b bzw. in die Ausgangsklemmen 14b, 15b übergehende Parallelleitungen 19a, 19b auf, die über eine Leitung 18 bzw. 19. ausgangsseitig mit dem Differenzdruckwandler 10 in Verbindung stehen.

Die Parallelleitungen 18a und 18b weisen einen als Hochpaß dienenden Kondensator 16 bzw. eine als Drossel dienende Induktivität 17 auf.

Über die Anschlußklemmen 14a, b und 15a, b ist der statische bzw. dynamische Druckanteil in der Druckleitung 2 als Gleich- bzw. Wechselspannungsanteil abrufbar.

Der Gleichspannungsanteil stellt dabei ein Maß für den Mengenstrom in der Druckleitung 2 dar; aus der Frequenz des Wechselspannungsanteils kann entweder die Drehzahl der Pumpe 1 oder des Motors 3 oder die Schlagzahl des Schlagkolbens 7a ermittelt werden (vgl. Fig. 1a bis 1c).

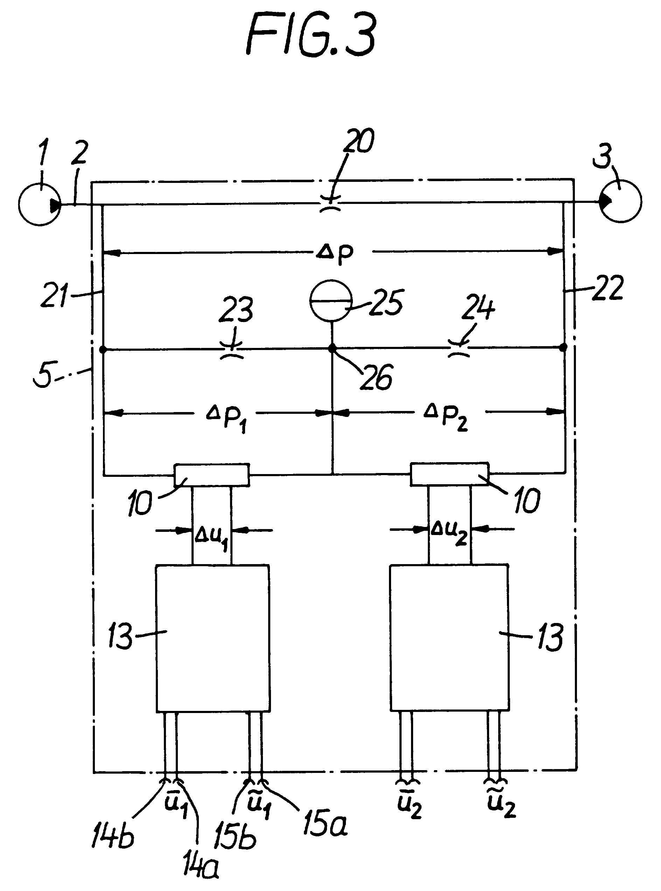

Die Fig. 3 zeigt - eingebaut in die Druckleitung 2 zwischen einer Pumpe 1 und einem Motor 3 - eine Ausführungsform der Meßeinheit 5, welche gleichzeitig die Ermittlung zweier dynamischer Druckanteile ermöglicht, nämlich den vom Energieerzeuger 1 und den vom Energieverbraucher 3 hervorgerufenen Wechseldruck.

Abweichend von der zuvor beschriebenen Ausführungsform umfaßt die Meßstrecke eine Meßdrosselstelle 20 und parallel dazu an Meßleitungen 21, 22 liegend zwei hintereinander geschaltete Drosselstellen 23 und 24, die durch ein als Druckspeicher 25 ausgebildetes Dämpfungselement schwingungstechnisch gegeneinander abgeschirmt sind. An den Meßleitungen 21, 22 liegt der Differenzdruck $\Delta p$ an.

Der Teildruck an den Drosselstellen 23 und 24 (gemessen zwischen der Meßleitung 21 und dem Mittelpunkt 26 bzw. diesem und der Meßleitung 22) ist mit $\Delta p_1$ bzw. $\Delta p_2$ bezeichnet. Dieser wird jeweils über einen Differenzdruckwandler 10 in ein elektrisches Ausgangssignal $\Delta u_1$ bzw. $\Delta u_2$ umgewandelt, welches in der bereits beschriebenen Weise jeweils mittels einer Elektroumformeinheit 13 in einen Gleich- und Wechselspannungsanteil $\bar{u}_1$, $\bar{u}_2$ bzw. $\tilde{u}_1$, $\tilde{u}_2$ aufgeteilt wird. Die genannten Spannungsanteile sind über die jeweils zugehörigen Anschlußklemmen 14a, b und 15a, b abrufbar und der weiteren Auswertung zuführbar.

Aus der Frequenz der Wechselspannungsanteile $\tilde{u}_1$ und $\tilde{u}_2$ kann gleichzeitig die Größe des theoretischen Fördermengenstroms der Pumpe 1 und bei Betrieb eines Schlagwerks (Fig. 1c) die Größe der Schlagkolben-Schlagzahl ermittelt werden; es besteht somit die Möglichkeit, das Verhältnis aus Schlagzahl und Fördermengenstrom als Eingangsgröße für eine Schlagwerksregelung einzusetzen.

Vorzugsweise sind auch bei der Ausführungsform der Meßeinrichtung gemäß Fig. 3 die Meßdrosselstelle 20 und die beiden hintereinander geschalteten Drosselstellen 23, 24 als viskositätsunabhängige Blende ausgebildet.

**Patentansprüche**

1. Meßeinrichtung für charakteristische Kenngrößen, welche die Arbeitsweise hydraulischer Aggregate - insbesondere Energieerzeuger wie Pumpen und Energieverbraucher wie Motoren (3), Schlagwerke (7), Zylinder (6) - anzeigen, mit einer Meßstrecke (8), welche in die Druckleitung (2) des Aggregats eingebaut ist und zumindest eine Drosselstelle (9) aufweist, und mit einem jeweils einer Drosselstelle zugehörigen, den an dieser anliegenden Differenzdruck erfassenden Differenzdruckwandler (10), dessen Ausgangssignal mittels einer Elektroumformeinheit (13) jeweils in einen Gleich- und einen Wechselspannungsanteil zerlegt und über deren Ausgangsklemmen (14a, -14b bzw. 15a, 15b) einer Auswertung zugeführt wird.

2. Meßeinrichtung nach Anspruch 1, dadurch gekennzeichnet, daß die Meßstrecke (8) eine Meßdrosselstelle (20) und parallel dazu liegend zwei hintereinander geschaltete Drosselstellen (23, 24) umfaßt, wobei letztere durch ein Dämpfungselement (25) gegeneinander abgeschirmt sind und jeweils einen Differenzdruckwandler (10) mit nachgeschalteter Elektroumformeinheit (13) aufweisen.

3. Meßeinrichtung nach Anspruch 2, dadurch gekennzeichnet, daß das Dämpfungselement als Druckspeicher (25) ausgebildet ist.

4. Meßeinrichtung nach zumindest einem der vorhergehenden Ansprüche, dadurch gekennzeichnet, daß die Meßdrosselstelle (20) und die zumindest eine Drosselstelle (9 bzw. 23, 24) als Blende ausgebildet sind.

5. Meßeinrichtung nach Anspruch 4, dadurch gekennzeichnet, daß zumindest eine der Blenden (9; 20) 23, 24) einen Blendenquerschnitt mit verstellbarer Größe aufweist.

6. Meßeinrichtung nach zumindest einem der vorhergehenden Ansprüche, dadurch gekennzeichnet, daß jede Elektroumformeinheit (13) als elektrische Weiche ausgebildet ist, die über einen Hochpaß (16) und über eine Induktivität (17) den Wechselspannungsanteil ($\tilde{u}$) des Ausgangssignals ($\Delta u$) von dessen Gleichspannungsanteil ($\bar{u}$) trennt.

**Claims**

1. Measuring device for establishing characteristic magnitudes which indicate the working of hydraulic systems - in particular energy generators such as pumps and energy consumers such as motors (3), percussion devices (7), cylinders (6) - with a measurement section (8), which is installed in the pressure line (2) of the system and has at least one throttling point (9), and with a differential pressure converter (10) associated with each respective throttling point detecting the differential pressure prevailing at said throttling point, the output signal from said differential pressure converter being split by means of an electric transformer unit (13) into a d.c. and a.c. voltage component and passed on via the output terminals (14a, 14b or 15a, 15b) thereof for evaluation.

2. Measuring device according to Claim 1, characterised in that the measurement section (8) comprises a measurement throttling point (20) and two throttling points (23, 24) located parallel thereto and connected one behind the other, the latter being shielded from one another by means of a damping element (25) and each having a differential pressure converter (10) with an electric transformer unit (13) connected downstream.

3. Measuring device according to Claim 2, characterised in that the damping element is in the form of a pressure accumulator (25).

4. Measuring device according to at least one of the preceding claims, characterised in that the measurement throttling point (20) and the at least one throttling point (9 or 23, 24) are constructed as an orifice.

5. Measuring device according to Claim 4, characterised in that at least one of the orifices (9; 20, 23, 24) has an orifice cross-section which is adjustable in size.

6. Measuring device according to at least one of the preceding claims, characterised in that each electric transformer unit (13) is constructed as an electrical shunt, which separates the a.c. voltage component

($\tilde{u}$) of the output signal ($\Delta u$) from its d.c. voltage

component ($\bar{u}$) via a high-pass filter (16) and via an inductance (17).


**Revendications**

1. Dispositif de mesure pour des grandeurs caractéristiques montrant la manière de travailler de systèmes hydrauliques, en particulier de producteurs d'énergie comme des pompes et de consommateurs d'énergie comme des moteurs (3), des mécanismes de percussion (7), des vérins (6), avec une section de mesure (8) qui est incorporée dans la conduite forcée (2) du système et présente au moins un point d'étranglement (9), et avec un convertisseur de pression différentielle (10) affecté à chaque fois à un point d'étranglement, détectant la pression différentielle adjacente à celui-ci et dont le signal de sortie est décomposé à chaque fois en une composante continue et alternative au moyen d'une unité de transformation électrique (13) et est amené, par l'intermédiaire des bornes de sortie (14a, b ou 15a, b) de celle-ci, à un dispositif d'évaluation.

2. Dispositif de mesure selon la revendication 1, caractérisé en ce que la section de mesure (8) comprend un point d'étranglement de mesure (20) et deux points d'étranglement (23, 24) montés l'un derrière l'autre et parallèles à celui-ci, les deux points d'étranglement (23, 24) étant protégés l'un de l'autre par un élément antivibratoire (25) et présentant chacun un convertisseur de pression différentielle (10) avec une unité de transformation électrique (13) placée en aval.

3. Dispositif de mesure selon la revendication 2, caractérisé en ce que l'élément antivibratoire se présente sous la forme d'un accumulateur hydraulique (25).

4. Dispositif de mesure selon au moins l'une des revendications précédentes, caractérisé en ce que le point d'étranglement de mesure (20) et le au moins un point d'étranglement (9 ou 23, 24) se présente sous la forme de diaphragme .

5. Dispositif de mesure selon la revendication 4, caractérisé en ce qu'au moins l'un des diaphragmes (9; 20, 23, 24) présente une section transversale avec grandeur réglable.

6. Dispositif de mesure selon au moins l'une des revendications précédentes, caractérisé en ce que chaque unité de transformation électrique (13) se présente sous la forme d'un aiguillage électrique qui sépare la composante alternative ($\widehat{u}$) du signal de

sortie ($\Delta u$) de sa composante continue ($\bar{u}$) par l'intermédiaire d'un passe-haut (16) et d'une inductance (17).

FIG.1a

FIG.1b

FIG.1c

# FIG. 2a

EP 0 492 279 B1

# FIG.2b

EP 0 492 279 B1

# FIG.3